# EUROPEAN PATENT SPECIFICATION

(11) **EP 0 899 185 B1**
(45) Date of publication and mention of the grant of the patent: **14.08.2002**
(21) Application number: 98101579.5
(22) Date of filing: 30.01.1998
(51) Int. Cl.: B62D 25/16, B62D 25/18

(54) **Method of Manufacturing a Splash panel**
Methode zur Fertigung eines Spritzwasserfänger
Methode de manufacture d'un Garde-boue anti éclaboussure

(30) Priority: 28.08.1997 FI 973545
(43) Date of publication of application: 03.03.1999
(73) Proprietor: Oy Parlok Ab, 21600 Parainen (FI)
(72) Inventor: Turpeinen, Jukka Antero, 21610 Kirjala (FI); Vainio, Veijo Heikki, 21600 Parainen (FI)
(74) Representative: Grättinger & Partner (GbR)

(56) References cited:
- US-A- 3 350 114
- US-A- 3 834 732
- US-A- 5 366 247

## Description

The present invention relates to a method of forming openings and spray-guiding means in a splash panel according to the preamble of the appended independent claim.

The invention thus relates to a method of forming openings and spray guiding means in a splash panel which can be affixed to the inner surface of the mud-guard and its extension, i.e. the flexible mud-flap,intended for the purpose of collecting the water and the mud, i.e. the spray, flung tangentially backwards from the wheels of a vehicle. The purpose of the splash panel is to absorb or dissipate the kinetic energy of the spray and direct the spray to flow in a controlled manner towards the road surface. The purpose of the splash panel is thus to prevent the spray from being slung from the surface of the mud-guard and/or its extension, the mud-flap, back against the wheel and from there upwardly and/or sidewardly, thereby impairing the visibility for other road users.

A method according to the preamble of claim 1 is generally known in the prior art. US-Patent 3,350,114 to Wilfred Salisbury describes a mud flap mounted rearwardly of at least the rear wheels of a vehicle, said mud flap comprising a sheet of elastomeric material, said sheet having a plurality of apertures therethrough and hinged flaps covering said apertures, said flaps being integral with said sheet along one edge and the ends of said one edge being formed with circular apertures, so that said flaps will be sufficiently flexible to be openened by a stream of of aqueous water and capable of deflecting said matter downwardly. Contrary to the present application, each aperture and associated flap is formed by cutting through the sheet, instead of cutting the flaps out of the plate and punching it to the backside of the plate. Also, this document does not teach to simultaneously form flaps and fixing members.

Various splash panels which are made of a plate-like element arranged on the inside of the rear end of the mud-guard and/or the mud-flap, with the front side towards the wheel and the backside towards the mud-guard, are already known. In some of these splash panels pegs or ridges are attached to the front side of the mud-guard for absorbing or dissipating the energy of the spray. A problem with these arrangements is especially the fact that a portion of the spray, despite of the pegs and ridges, impinges on the surface of the splash panel and the water flowing along the surface (the splash), which results in the fact that spray is flung back upwardly and sidewardly. A splash panel provided with pegs and ridges will soon be clogged with mud, thereby becoming ineffective.

It has also been proposed to manufacture splash panels by attaching lamellas arranged on top of each other to vertical supporting members as disclosed in the UK patent applications GB 2 300 396 and GB 2 250 249. The purpose of this design is to guide the spray between the lamellas to the space between the splash panel and the mud-guard and from there downwardly towards the road surface. High manufacturing costs due to the complicated design and the insufficient mechanical durability render this arrangement problematic. Attaching the lamella structure to the mud-guard and. the flexible mud-flap also cause problems. This arrangement has probably never been produced commercially.

Earlier an arrangement has also been proposed in which a splash panel has been disposed at a distance of 20 mm from the mud-guard and/or the mud-flap, in which holes or openings have been formed so as to guide the water flung from the wheel to the space between the mud-guard and the splash panel. In the proposed arrangement the proportion of the openings in relation to the total surface area is however fairly small, i.e. about 10 to 50 %, therefore the efficiency of the splash panel would be low. The spray which impinges on the mud-guard after having gone unobstructed through the openings causes back-splashing, i.e. exactly what should be avoided. Further, the fraction of the spray which is reflected from the surface of the splash panel between the openings is relatively high. For attaching the splash panel to the mud-guard, special fastening means are needed, which may guide the splash back towards the wheel.

The object of the present invention is, therefore, to provide an improved method of forming openings and spray-guiding flaps in a splash panel.

Another object of the invention is the provision of a simple and inexpensive method of manufacturing mechanically durable, easily attachable splash panels.

In order to achieve the above objects, the method of forming openings and spray-guiding flaps in the splash panel according to the invention is characterized in what is defined in the characterizing portions of the appended independent claim.

A typical splash panel is formed of a plate, comprising
- openings going through the plate, and
- a spray-guiding member associated with each opening.
The spray-guiding member is preferably formed of material which is partly detached at the opening from the plate-like element, which material in association with the opening forms a flap. Each flap is fastened at the top edge to the corresponding opening and bent towards the mud-guard so as to form an angle α of between 30° and 45°, preferably between 35° and 40° and typically about 37.5° with a plane which is at right angles to the splash panel and substantially horizontal. The splash panel is generally arranged vertically inside a mud-guard, whereby its flaps extend horizontally with its top edges correspondingly extending in horizontal direction.

The splash panel which is provided with the above described spray-guiding members can be manufactured by punching said openings and producing said flaps of the splash panel or by moulding, for instance by injection-moulding.

The splash panel is preferably made of elastic, wear-resisting plate material, which allows attaching of the splash panel by welding or by other simple methods to the mud-guard and/or the mud-flap. The joint between the mud-guard and the mud-flap is usually elastic. Thus the attachment of the splash panel to these thus also has to be elastic and strong. The fixing members in the arrangement according to the invention can be made elastic and strong by detaching their sides from the panel as described more in detail below.

The splash panel is preferably made of a planar plate of machineable material by cutting, perforating or by punching openings therein by a puncher. Soft wear-resisting thermoplastic materials, such as HDPE (high density polyethylen) or the like, have proved to be suitable materials for this purpose.

The thickness of the splash panel material can vary depending on the application. The thickness of the plate is in practice usually between 1 and 6 mm, typically 2.5 to 3 mm. The size of the openings which are to be made in the splash panel depend on the application. The openings have, however, usually a width of about 10 to 50 mm, typically about 25 mm and a height of about 5 to 20 mm, typically about 10 to 15 mm. The width of the openings depends also on the thickness of the splash panel plate material. In a plate having a thickness of 2 to 3 mm, the maximum width of the openings is about 40 mm, and in a plate having a thickness of 4 - 6 mm, about 80 mm. Due to the manufacturing method, the flaps attached to the top edge of the openings and extending in a downwardly inclined direction towards the mud-guard and the road surface have substantially the same width and height as the openings.

The openings can be made in the splash panel in superimposed vertical rows, in adjacent horizontal rows, or freely without any given geometry, but in any case so as to cover a sufficient surface area of the splash panel.

The width of the neck of land between the vertical rows of openings, which as regards the spray suppressing effect is inactive, depends on the desired strength of the part in question and thus depends directly on the strength and the thickness of the material used.

In practice the width of the neck of land between the rows can vary between 1 and 10 mm and is typically 3 to 4mm.

The width of the undetached neck of land between two superimposed openings is also kept as narrow as possible, typically between 2 and 4 mm. The spray-guiding flap is fastened to the splash panel by means of this neck of land only. When the flap is bent during the machining (perforating or punching) stroke, the neck of land is bent together with the flap, the ends of the neck of land forming a hinged joint which changes its shape, i.e., when the flap is detached at the bottom and side edges from the splash panel when forming the opening and is bent around the top edge,i.e. outwardly to the back side of the splash panel, the narrow neck of land between the superimposed openings also bends at the same time, together with the flap. The flap, which is partly detached from the panel when the opening is formed, and the neck of land or top edge, i.e. the intermediate part between the opening and the next opening above it, form together a substantially continuous planar surface which reflects the spray behind said openings downwardly and towards the mud-guard. The flap is arranged with respect to the plate at such an angle that it prevents a spray directed towards the opening at the typical angle from passing unobstructed straight through the opening. This angle is further chosen so that it is advantageous in view of suppressing the spray, i.e. that it absorbs or dissipates the kinetic energy of the spray. In the arrangement according to the invention, the major portion of the spray impinges on the flaps and will thus flow in a controlled manner downwardly within hollow space between the backside of the splash panel and the inner side of the mud-guard towards the surface of the road.

In the arrangement according to the invention there is thus practically no inactive surface, i.e. a surface which would not absorb sprays. The sprays which are flung from the wheel do usually not impinge on the splash panel at right angles thereto but are directed obliquely upwards against the splash panel. The spray is usually thrown upwardly at an angle of 15° to 30° as measured towards a plane which is at right angles to the splashpanel. On the other hand, the flaps formed in theopenings are bent downwards, e.g. 30° to 60°, preferably 35° to 45°, typically 40° from this perpendicular plane, thereby covering a sufficiently large portion behind the openings so that all sprays impinge on a flap of an opening and are not able to pass straight through the opening and impinge on the mud-guard or the mud-flap behind the splash panel.

The openings and spray-guiding flaps according to the invention are typically formed by partly detaching from the splash panel, by penetrating or punching by a puncher against a die or in a like manner, pieces having the same shape as the opening and forming flaps which are fastened at the top edge of the openings. Only the bottom and side edges of the puncher are cutting edges, i.e. edges of the same shape as the die. Between the top edge of the puncher and the top edge of the die there is a gap corresponding to the thickness of the splash panel material, which makes it possible to extend the puncher beyond the depth required for the cutting of the bottom and side edges. By extending the puncher beyond the depth required for cutting, bending of the flap is brought about. The flap is bent mainly by the top edge (i.e. the back edge) of the puncher, which for this reason is preferably slightly rounded. Because of the back-springing of the material, the flap is usually bent to a 20° to 30° smaller angle than the desired final angle α.

According to the method of the invention, the flap-shaped piece which is partly detached from the splash panel is bent around its top edge, i.e. towards the mud-guard, so that the flap produced in this way forms an angle α with respect to a plane which is at right angles to the splash panel and usually substantially horizontal, which is about 30° to 60°, preferably 35° to 45°, and most preferably about 40°. The ends of the neck of land between the superimposed openings formed of splash panel plate material are used as a hinge when the flap of the lower opening is bent towards the mud-guard.

In the splash panel the height of the flaps is about 10 to 20 mm, preferably about 12 to 14 mm and the flaps are typically at a distance of about 16 to 24 mm, preferably about 18 to 22 mm from the surface of the mud-guard. The greatest possible distance between the outer surface of the splash panel and the inner surface of the mud-guard is usually about 25 to 30 mm, because the space between the splash panel and the mud-guard is limited by the relatively small free space between the wheel and the mud-guard, which space is also needed for other purposes, such as snow chains. The gap between the flap and the mud-guard should, however, preferably be larger then the distance between the superimposed flaps, i.e. larger than the perpendicular distance of the flaps from each other, so that stones or the like particles having entered the space between the mud-guard and the flaps through the openings can fall freely downwards in this space. The distance between the mud-guard and the splash panel can, when required, be decreased by decreasing the height of the flaps, without the flow of sprays in this space being hindered.

The splash panel is affixed to the mud-guard by means of distance pieces or the like formed therein. In a splash panel which is formed by a method according to a typical embodiment of the invention, recesses forming distance pieces having substantially the same depth as the distance between the splash panel and the mudguard, by means of which the splash panel is affixed by conventional methods to the mud-guard, are formed in the splash panel by pressing or partly perforating (punching) it from its front side. The recesses are preferably made of rectangular splash panel strips. The recesses are thus substantially rectangular in a cross-section taken at the splash panel. The recesses are preferably pressed in the splash panel at the same manufacturing stage as the openings and the flaps.

When the splash panel is manufactured, the vertical edges of the recesses are preferably cut open, i.e two cuts are made in the panel, so that the rectangular strip of material which is attached to the panel at the top and bottom edges need to be stretched in one direction only when the material is pressed to the desired depth. Side openings are thus formed between the splash panel and the edges of the strip of material cut out from the splash panel, which side openings in the installed splash panel form a flow path for the sprays getting into the recesses, the sprays being then guided through the side openings into the space between the splash panel and the mud-guard. The vertical cross-section taken at right angles to the panel is typically shaped like a truncated triangle with rounded corners, i.e. its apex is obtuse.

The invention will now be described more in detail with reference to the accompanying drawings, on which
- FIG. 1: is a fragmentary, elevational front view of a splash panel. The splash panel is not part of the invention; FIG. 1 is at the same time a view taken along line A-A of FIG. 2;
- FIG. 2: is a cross-sectional view along line B-B of FIG. 1;
- FIG. 3: is a schematic fragmentary cross sectional view of the splash panel (not belonging to the invention) and the tools which are needed for forming the openings and the flaps, before the actual stage of manufacturing;
- FIG. 4: is a view in accordance with FIG. 3 during the stage of manufacturing;
- FIG. 5: is a schematic fragmentary cross-sectional view of the splash panel and the tools for forming the fixing members, before the actual stage of manufacturing;
- FIG. 6: is a view in accordance with FIG. 5, during the stage of manufacturing; and
- FIG. 7: is a cross-sectional view along a mid-plane perpendicular through FIG. 6, during the stage of manufacturing.

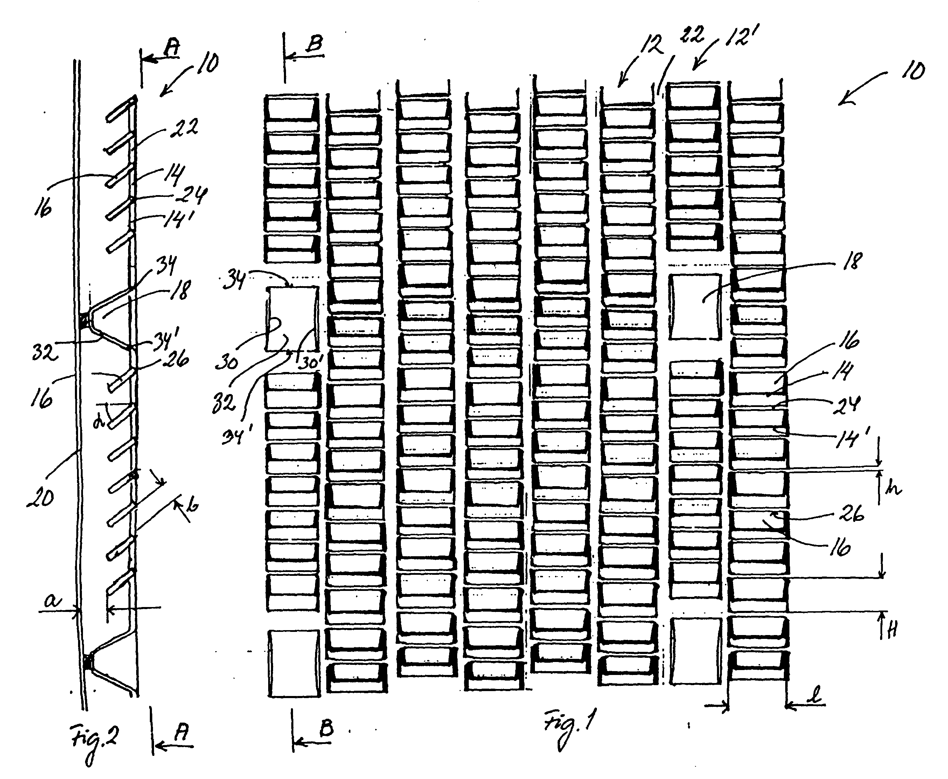

Fig. 1 and 2 illustrate a portion of a splash panel 10, comprising a plurality of rows 12, 12' of openings 14 and flaps 16 in association with the openings. Fixing members 18 have further been formed in the splash panel, by means of which the splash panel 10 can be attached to the mud-guard located a distance apart from it. Openings are usually not made in the top and bottom edges of the splash panel, these edges can instead be slightly bent to make the panel more solid.

There is a vertical unbroken strip-like splash panel portion 22, typically 1 to 10 mm, preferably 2 to 4 mm wide, between adjacent rows 12, 12' of openings. The uncut neck of land 24 between superimposed openings 14, 14' has preferably a height (h) of 2 to 4 mm and the same width (l) as the openings. The neck of land is, however, bent when the flap is bent, the height of the neck of land in the final panel therefore being smaller than it originally was after having been cut, thereby forming angular edges 16.

The width (l) of the openings 14, 14' formed in the splash panel is, depending on the thickness of the panel, about 10 to 50 mm, typically about 25 mm, and the height (H) about 5 to 20 mm, typically about 15 mm. The opening is formed in the panel when a portion having a height of for instance 10 mm, forming the main part of the flap, is partly detached from it, and when this and the necks of land between the superimposed openings are bent towards a back sheet where it is to be fastened like a mud-guard, so that the necks of land form a small part of the bent flap in the final splash panel. When the necks of land are bent together with the flaps, the height of the opening will increase a few millimeters, i.e. in such a way that the height of the opening is, for instance, about 10 to 15 mm.

The openings may have a height of up to 40 mm, in special cases even more, in a panel having a thickness of 2 to 3 mm. In thicker panels having a thickness of 4 to 6 mm, the openings may have a height of up to 80 mm and in special cases even more.

The flaps 16, which are fastened to the openings at the top edges 26, are inclined downwardly so that they form an angle α of about 30° to 60°, typically about 35° to 45°, preferably about 40° with a plane parallel with the top edge of the openings and at right angles to the splash panel.

Fixing members 18 are in the embodiment illustrated in the figures formed in every sixth row 12' of openings and in each row 12' of openings between every group of seven openings. The fixing members can of course, depending on the case, be formed more densely or more sparsely, for instance in every fourth row of openings and between every group of five superimposed openings, and fixing members need not be formed only in certain rows of openings but can be formed at different levels in different rows. The fixing members can typically be located about 100 to 150 mm apart from each other.

The flaps are bent so that the distance (a) of the lower end from the surface of the mud-guard is preferably larger than the distance (b) between the superimposed flaps, in order that the material which passes between the flaps to the gap between the splash panel and the mud-guard can unobstructedly flow downwards in this gap.

The fixing members 18 are formed of rectangular strips 32 of the splash panel, which are cut open at the vertical edges 30, 30' from the panel. The strip 32 forming the fixing member is thus fastened to the splash panel at the top and bottom edges 34, 34' only. This strip 32 is bent towards the mud-guard and fastened thereto by conventional methods like rivets, screws, spot welding etc., which need not to be described in more detail.

The stages of manufacturing for forming the openings and the flaps in the splash panel 10 are illustrated in Fig. 3 and 4. When appropriate, the same reference numerals are used as in Fig. 1 and 2. In Fig. 3 the splash panel is disposed between a die 36 and a puncher 38. The openings 14 and the flaps 16 are formed in the panel as shown in Fig. 4 by punching and cutting partly out flap-shaped pieces from the panel.

The cross-section of the punchers have substantially the same shape and size as the openings 14 to be formed. The point 40 of the puncher 38 is typically cut to an angle β of 15° to 45° in order to facilitate the cutting of the panel and bending of the flaps. The punchers penetrate the panel 10 when moving in the direction of an arrow 44 into the recesses 46 along the bottom 48 and the neighbouring sides, so that they partly cut out a piece shaped like the opening 14, i.e. the flap 16. The cutting process starts from the bottom edge of the opening when the point 40 of the puncher touches the panel and proceeds upwardly along the sides. The bottom and side parts of the recesses 46 formed in the counterpart or die 36 correspond to the shape of the bottom and side edges of the puncher 38.

The height (hp) of the puncher is smaller than the height (hr) of the recess in order to have a gap formed between the upper part of the puncher and the upper part of the recess, which makes it possible to bend the flap. The puncher does not cut out the flap 16 at the top edge but bends the flap inwardly into the recess 46. When the neck of land 24 between the superimposed openings 24 is small, it turns down along almost its entire length together with the flap so that the flap and the neck of land together form a planar surface 15 as shown in Fig. 4. The ends of the necks of land function as hinges when the flaps are being turned.

The punchers are preferably pushed through the panel and into the recesses 46 in such a way that the flaps 16 in the manufacturing stage form a smaller angle α with a plane perpendicular to the splash panel than after the manufacturing stage. Then the flaps will spring back to a larger angle. The angle α is therefore preferably smaller in the manufacturing stage than the desired angle in the final splash panel. This smaller angle is brought about for instance by pushing the puncher forwardly an extra 3 to 5 mm when the flaps have reached the desired final angle. The upper front corner (forming the back angle γ) of the puncher 38, which is slightly rounded, will then push the flap so that it bends a little more. The degree of back-springing depends on the material.

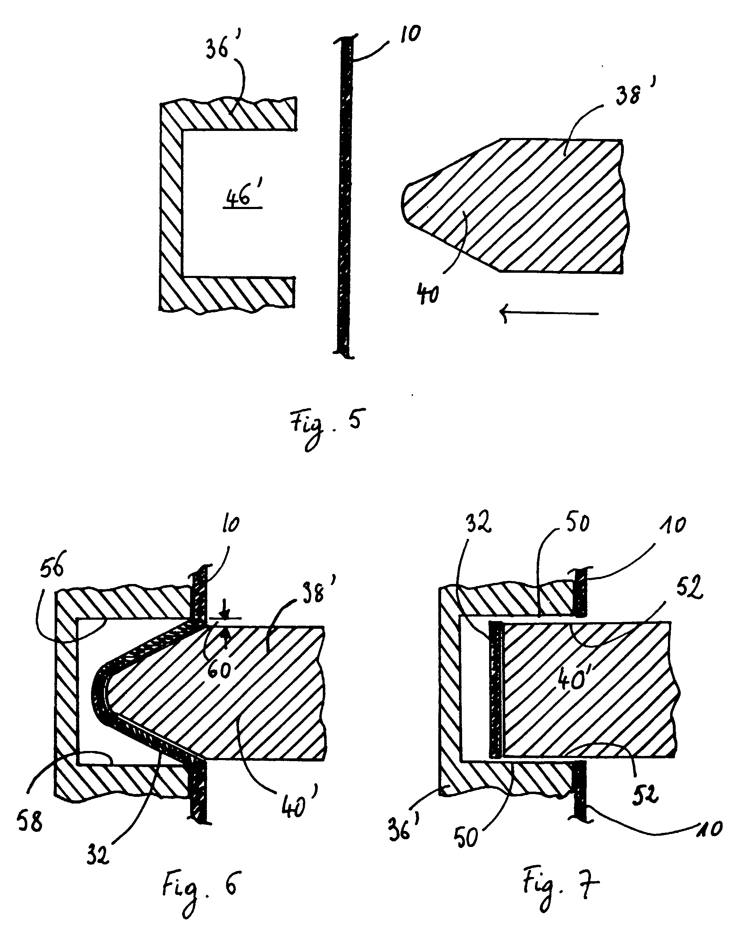

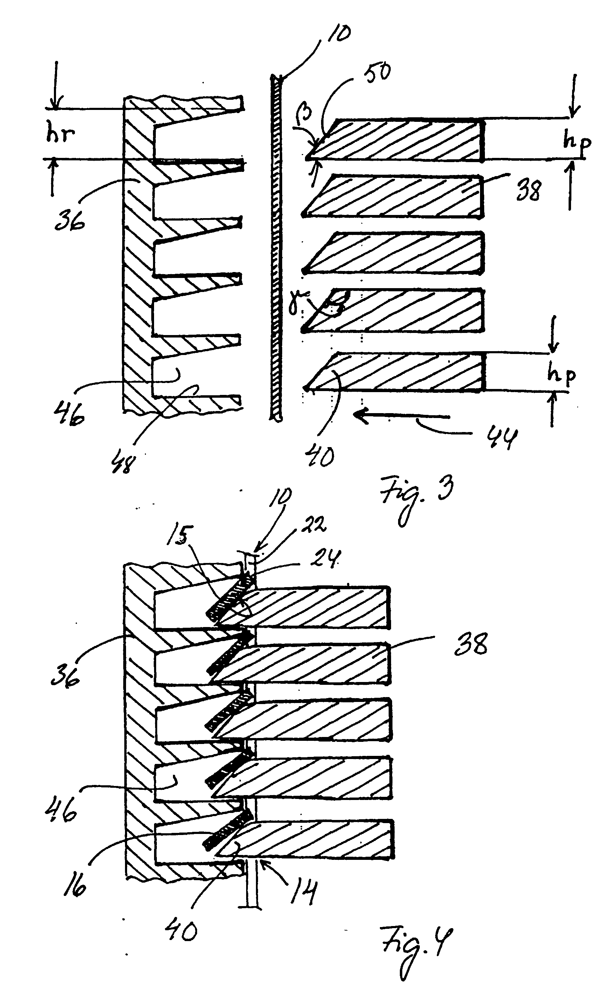

Fig. 5, 6 and 7 illustrate the stages of manufacturing of the fixing members 18 in the splash panel 10. The fixing members are made in a corresponding punching process as the flaps 16. In this case the point 40' of the puncher 38' corresponds to the shape of the fixing members 18, to be made in the panel. The roundness of the point of the puncher is of great importance for achieving proper stretching of the material when punching the fixing members.

The cutting vertical sides 50 of the die 36' are located at the same distance from each other as the vertical sides 52 of the puncher 38; correspondingly, the puncher, when penetrating into the recess 46', will make vertical cuts in the splash panel 10 at the vertical sides of the recess, whereby a strip 32 forming the fixing member and having vertical edges 30, 30' is partly cut out from the splash panel 10. There remains however a gap 60 corresponding to the thickness of the splash panel material between the puncher 38' and the top and bottom edges 56, 58 of the recess 46'; if needed punching of the fixing member is extended an extra 3 to 5 mm to compensate back-springing of the stretched strips 32. To reduce back-springing, gap 60 may be reduced, thus scrunching material at the top edge of the flaps; as a result spring-back forces are minimized, allowing an even smaller angle α and height of the flap is increased, which gives more efficiency.

As described above the puncher 38' is preferably pushed deeper than required to achieve the wanted shape of the fixing member even if the material tends to spring back after its manufacturing. It can easily be found out how deep the puncher must be pushed in each case in order to achieve the desired result. Usually an extra 3 to 5 mm pushing stroke is sufficient. If for instance a depth of the fixing member of 20 mm is desired, the puncher can be pushed to a depth of 25 mm, the material springing back 5 mm, thereby forming a fixing member of the desired depth.

The splash panel is preferably manufactured with a tool by means of which at the same time, i.e. in one stroke or punching operation, all openings and flaps as well as the fixing members are formed. Alternatively the splash panel can also be manufactured in stages, for instance in a way that the openings and flaps are made row by row or that a section of the panel of suitable width, for instance 10 cm, is made at a time.

Instead of a mud-guard the splash panel as described above can also be fastened to any other backing plate like a flat sheet of material to operate as a spray suppression material which can be used as such as a spray suppression device or as a layer to be fastened in a mud-guard or the like.

## Claims

1. Method of forming openings and spray-guiding members in a splash panel to be affixed to the mudguard (20) and/or the mud-flap of a vehicle or the like for collecting and guiding spray of surface water from the wheels,
**characterized in that** the method comprises the steps of punching openings (14, 14') in a plate-like panel (10) with a puncher (38), and of bending flaps (16) of substantially the same shape as the openings around an uncut edge (26) of each opening (14, 14'), so that the flaps are turned into an oblique position with respect to the panel (10), and that simultaneously with punching said openings (14, 14') recesses forming distance pieces having substantially the same depth as the distance between the panel (10) and the mud-guard (20) are formed by separate punching members (38').

2. Method according to claim 1,
**characterized in that** the punchers (38) are pushed through the panel (10) in such a way that the flaps (16) in the manufacturing stage form a smaller angle (α) with a plane perpendicular to the splash panel than after the manufacturing stage to compensate back-springing of the flaps.

3. Method according to claim 1 or 2,
**characterized in that** the punching members (38') are pushed deeper than required to compensate back-springing of the recesses.

4. Method according to anyone of the preceding claims,
**characterized in that** the recesses are formed of rectangular portions of the panel (10) which are cut open at two parallel edges (30, 30') to form a strip (32) which is stretched towards the backside of the panel (10).

## Patentansprüche

1. Verfahren zum Formen von Öffnungen und Spritzwasserführungsgliedern in einem Spritzwasserfänger, der an dem Kotflügel (20) und/oder der Spritzklappe eines Fahrzeugs oder Ähnlichem zum Sammeln und Leiten des Spritzens von Oberflächenwasser von den Rädern zu befestigen ist,
**dadurch gekennzeichnet, dass**
das Verfahren die Schritte des Stanzens von Öffnungen (14, 14') in einem plattenartigen Spritzwasserfänger (10) mit einem Lochstanzer (38) und Biegen der Klappen (16) von im Wesentlichen derselben Form wie die Öffnungen um eine ungeschnittene Kante (26) jeder Öffnung (14, 14') umfasst, so dass die Klappen in eine schräge Position zu dem Spritzwasserfänger (10) gedreht werden und gleichzeitig mit dem Stanzen der Öffnungen (14, 14') Aussparungen, die Abstandsstücke formen, die im Wesentlichen dieselbe Tiefe wie der Abstand zwischen dem Spritzwasserfänger (10) und dem Kotflügel (20) aufweisen, durch separate Stanzglieder (38') geformt werden.

2. Verfahren nach Anspruch 1,
**dadurch gekennzeichnet, dass**
die Lochstanzer (38) derart durch den Spritzwasserfänger (10) gedrückt werden, dass die Klappen (16) in dem Herstellstadium einen kleineren Winkel (α) zu einer Ebene, die senkrecht zu dem Spritzwasserfänger ist, als nach dem Herstellstadium formen, um Rückfedern der Klappen auszugleichen.

3. Verfahren nach Anspruch 1 oder 2,
**dadurch gekennzeichnet, dass**
die Stanzglieder (38') tiefer als erforderlich gedrückt werden, um Rückfedern der Aussparungen auszugleichen.

4. Verfahren nach einem der vorherigen Ansprüche,
**dadurch gekennzeichnet, dass**
die Aussparungen aus rechtwinkligen Abschnitten des Spritzwasserfängers (10) geformt werden, die an zwei parallelen Kanten (30, 30') offen geschnitten sind, um einen Streifen (32) zu formen, der zu der Rückseite des Spritzwasserfängers (10) gestreckt ist.

## Revendications

1. Procédé pour former des ouvertures et des éléments de guidage de projections dans un panneau d'éclaboussure destiné à être fixé au garde-boue (20) et/ou à la bavette d'un véhicule ou similaire pour recueillir et guider les projections d'eau de surface provenant des roues, **caractérisé en ce que** le procédé comprend les étapes consistant à découper des ouvertures (14, 14') dans un panneau en forme de plaque (10) au moyen d'un poinçon (38), et à courber des volets (16) ayant sensiblement la même forme au niveau des ouvertures autour d'un bord non coupé (26) de chaque ouverture (14, 14'), de telle manière que les volets sont tournés en une position oblique par rapport au panneau (10), et que simultanément au perçage desdites ouvertures (14, 14') des évidements formant des pièces distantes ayant sensiblement la même profondeur que la distance entre le panneau (10) et le garde-boue (20) sont formés par des éléments de découpe distincts (38').

2. Procédé selon la revendication 1, **caractérisé en ce que** les poinçons (38) sont poussés à travers le panneau (10) de telle manière que les volets (16) dans l'étape de fabrication, forment un angle (α) plus petit par rapport à un plan perpendiculaire au panneau d'éclaboussure qu'après l'étape de fabrication pour compenser la détente des volets.

3. Procédé selon la revendication 1 ou 2, **caractérisé en ce que** les éléments de découpe (38') sont poussés plus profondément que requis pour compenser la détente des évidements.

4. Procédé selon l'une quelconque des revendications précédentes, **caractérisé en ce que** les évidements sont formés par des parties rectangulaires du panneau (10) que l'on ouvre au niveau de deux bords parallèles (30, 30') pour former une bande (32) qui est étirée vers la face arrière du panneau (10).
